# EUROPÄISCHE PATENTANMELDUNG

(11) **EP 2 573 153 A2**
(43) Veröffentlichungstag der Anmeldung: **27.03.2013**
(21) Anmeldenummer: 12184063.1
(22) Anmeldetag: 12.09.2012
(51) Int. Cl.: C09K 5/06

(54) **Wärmespeichernde Zusammensetzung enthaltend Natriumsulfat, Decahydrat und Superabsorber**

(30) Priorität: 26.09.2011 US 201161538959 P; 26.09.2011 EP 11182705
(71) Anmelder: BASF SE, 67056 Ludwigshafen (DE)
(72) Erfinder: Rieger, Ralph, 67059 Ludwigshafen (DE); Charles, Jens, 67240 Bobenheim-Roxheim (DE); Schröder-Grimonpont, Tina, 76764 Rheinzabern (DE); Lopez Villanueva, Francisco Javier, 67105 Schifferstadt (DE); Mertes, Jürgen, 67067 Ludwigshafen (DE); Klimov, Evgueni, 67071 Ludwigshafen (DE); Herth, Gregor, 83308 Trostberg (DE)

(57) **Zusammenfassung**

Die vorliegende Erfindung betrifft eine wärmespeichernde Zusammensetzung enthaltend
60 - 98 Gew.-%
Natriumsulfat Decahydrat und
1 - 10 Gew.-%
eines oder mehrerer Superabsorbers
1- 10 Gew.-%
eines oder mehrerer Keimbildner und
0 - 20 Gew.-%
eines oder mehrerer wasserlöslicher Salze
jeweils bezogen auf die wärmespeichernde Zusammensetzung, wobei der Superabsorber in einpolymerisierter Form enthält
a) mindestens 50 Mol-% bezogen auf den Superabsorber eines oder mehrerer monoethylenisch ungesättigte, Säuregruppen enthaltender Monomere, wobei der Neutralisationsgrad der monoethylenisch ungesättigten, Säuregruppen enthaltenden Monomere 15 bis 85 Mol-% beträgt und
b) 0,015 bis 0,1 Mol-% bezogen auf die Gesamtmenge Monomere mindestens eines Vernetzers,
ein Verfahren zu ihrer Herstellung sowie ihre Verwendung als wärmespeicherndes Baumaterial sowie als Wärmespeicherelement für Fahrzeuge, Wände von Transportbehältern oder sonstigen Wärmespeicherbehältern.

## Beschreibung

Die vorliegende Erfindung betrifft eine wärmespeichernde Zusammensetzung enthaltend Natriumsulfat Decahydrat und einen oder mehrere Superabsorber, ein Verfahren zu ihrer Herstellung, ihre Verwendung als wärmespeicherndes Baumaterial sowie als Wärmespeicherelement für Fahrzeuge, Wände von Transportbehältern oder sonstigen Wärmespeicherbehältern.

In den letzten Jahren sind als neue Materialkombination Baustoffe mit Latentwärmespeichermaterialien untersucht worden. Die Funktionsweise der Latentwärmespeichermaterialien, oftmals auch als PCM (phase change material) bezeichnet, beruht auf der beim fest/flüssig-Phasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden. Vielfach werden als Latentwärmespeichermaterialien organische Paraffine eingesetzt, die beim Überschreiten des Phasenüberganges schmelzen. Die flüssige Phase macht in der Regel eine Stabilisierung der Form durch beispielsweise eine Hülle oder Kapselwand erforderlich.

Alternativ zur Mikroverkapselung lehrt die US 6,319,599 die Herstellung eines wärmespeichernden Composites, durch Dispergieren eines Superabsorbers und eines Latentwärmespeichermaterials in einer Matrix. Der Superabsorber bindet das flüssige Latentwärmespeichermaterial und hält es so in der Matrix.

Ebenfalls hohe Schmelzenthalpien und damit gute wärmespeichernde Eigenschaften haben Salzhydrate. Problematisch bei den Salzhydraten ist jedoch ihr inkongruentes Schmelzen. So wird nicht ausreichend Kristallwasser freigesetzt, um das Salz komplett zu lösen. Es entstehen neben einer an Salz gesättigten wässrigen Lösung noch feste Hydrate mit einem niedrigeren Kristallwassergehalt als die eingesetzten Salzhydrate. Damit kommt es jedoch in der Regel zu einer Entmischung der Salzhydrate, die zur Folge hat, dass die Reaktion nicht vollständig reversibel ist und die Wärmekapazität des Systems mit jedem Zyklus abnimmt.

Um ein solches Entmischen zu verhindern, lehrt die EP 273 779 die Polymerisation von Natriumacrylat und einem Vernetzer in Gegenwart von wasserfreiem Natriumsulfat und Wasser. Der sich bildende Superabsorber quillt durch das Wasser und verhindert so das Entmischen des schmelzenden Salzes. Es hat sich jedoch gezeigt, dass sich bereits beim Herstellen der Mischung das Natriumsulfat abscheidet und somit keine homogene Mischung zu erhalten ist.

Die US 4,585,843 lehrt eine Gelpolymerisation von Acrylaten in Gegenwart von anorganischen Salzhydraten wie Natriumsulfat Decahydrat zur Wärmeabfuhr. Als Acrylate werden Natriumacrylat sowie dessen Mischungen mit Acrylamid eingesetzt.

Demgemäß wurden Zusammensetzungen gesucht, in denen es nicht zu einer Entmischung bei inkongruent schmelzenden anorganischen Latentwärmespeichern kommt. Ferner sollte die Mischung eine geringe Unterkühlungsneigung haben.

Demgemäß wurde eine wärmespeichernde Zusammensetzung gefunden enthaltend
- 60 - 98 Gew.-%: Natriumsulfat Decahydrat und
- 1 - 10 Gew.-%: eines oder mehrerer Superabsorbers
- 1- 10 Gew.-%: eines oder mehrerer Keimbildner und
- 0 - 20 Gew.-%: eines oder mehrerer wasserlöslicher Salze
jeweils bezogen auf die wärmespeichernde Zusammensetzung, wobei der Superabsorber in einpolymerisierter Form enthält
a) mindestens 50 Mol-% bezogen auf den Superabsorber eines oder mehrerer monoethylenisch ungesättigte, Säuregruppen enthaltender Monomere, wobei der Neutralisationsgrad der monoethylenisch ungesättigten, Säuregruppen enthaltenden Monomere 15 bis 85 Mol-% beträgt und
b) 0,015 bis 0,1 Mol-% bezogen auf die Gesamtmenge Monomere mindestens eines Vernetzers.

Die Anmeldung betrifft ferner ein Verfahren zu ihrer Herstellung sowie ihre Verwendung als wärmespeicherndes Baumaterial sowie als Wärmespeicherelement für Fahrzeuge, Wände von Transportbehältern oder sonstigen Wärmespeicherbehältern.

Natriumsulfat Decahydrat setzt an seinem Schmelzpunkt von 32°C beim Schmelzen 250 J/g frei. Es ist in unterschiedlichen Reinheitsgraden im Handel erhältlich beispielsweise 90 %, 97 % oder > 99 %. Da mit zunehmender Reinheit eine höhere Schmelzenthalpie einhergeht, sind Salze mit höherer Reinheit bevorzugt. Doch auch bereits mit weniger reinen Substanzen lassen sich gute Ergebnisse erzielen.

Superabsorber sind bekannt. Für derartige Materialien sind auch Bezeichnungen wie "hochquellfähiges Polymer" "Hydrogel" (oft auch für die trockene Form verwendet), "Hydrogel bildendes Polymer", "Wasser absorbierendes Polymer", "absorbierendes gelbildendes Material", "quellfähiges Harz", "wasserabsorbierendes Harz" oder ähnliche gebräuchlich. Es handelt sich dabei um vernetzte hydrophile Polymere, wobei wasserabsorbierende Polymere auf Basis teilneutralisierter Acrylsäure am weitesten verbreitet sind. Die wesentlichen Eigenschaften von Superabsorbern sind ihre Fähigkeiten, ein Vielfaches ihres Eigengewichts an wässrigen Flüssigkeiten zu absorbieren und die Flüssigkeit auch unter gewissem Druck nicht wieder abzugeben.

Erfindungsgemäß eingesetzte Superabsorber enthalten in einpolymerisierter Form
a) mindestens 50 Mol-% bezogen auf die Gesamtmenge aller Monomere monoethylenisch ungesättigten, Säuregruppen enthaltenden Monomere, wobei der Neutralisationsgrad der monoethylenisch ungesättigten, Säuregruppen enthaltenden Monomere 15 bis 85 Mol-% beträgt sind
b) 0,015 bis 0,1 Mol-% bezogen bezogen auf die Gesamtmenge aller Monomere mindestens einen Vernetzer und
c) gegebenenfalls ein oder mehrere ethylenisch und/oder allylisch ungesättigte Monomere, die von den Monomeren a) verschieden sind und mit ihnen copolymerisierbar sind.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Der Anteil der Monomeren a) beträgt vorzugsweise mindestens 70 Mol-%, besonders bevorzugt mindestens 90 Mol-%, insbesondere mindestens 95 Mol-% und bevorzugt höchstens 99,985 Mol-% bezogen auf die Gesamtmenge aller Monomere.

Der Anteil an Acrylsäure, Methacrylsäure und/oder deren jeweiligen Salzen an der Gesamtmenge der Monomeren a) beträgt vorzugsweise mindestens 50 Mol-%, besonders bevorzugt mindestens 90 Mol-%, ganz besonders bevorzugt mindestens 95 Mol-%.

Die Säuregruppen der Monomere a) in einpolymerisierter Form sind erfindungsgemäß zu 15 bis 85 Mol-% neutralisiert. Mit anderen Worten: der Superabsorber hat einen einen Neutralisationsgrad (DN) von 15 bis 85 %. Der Neutralisationsgrad ist definiert als der molare Anteil der neutralisierten Säuregruppen enthaltenden Monomere im Verhältnis zur molaren Gesamtmenge an neutralisierter und nicht neutralisierter Säuregruppen enthaltenden Monomere. Die Säuregruppen des Monomers a) in einpolymerisierter Form sind bevorzugt zu 25 bis 80 Mol-%, besonders bevorzugt zu 25 bis 60 Mol-%, ganz besonders bevorzugt zu 25 bis 50 Mol-% neutralisiert.

Es ist möglich, bereits teilneutralisierte Säuregruppen tragende Monomere einzusetzen. Ebenso ist es möglich, einen Teil der Säuregruppen des Polymers zu neutralisieren. Schließlich ist es auch möglich, eine Kombination aus Polymerisation von teilneutralisierten Monomeren und anschließender Neutralisation eines Teils der Säuregruppen zu wählen. Bevorzugt werden teilneutralisierte Monomere a) gewählt, deren Neutralisationsgrad bereits dem Neutralisationsgrad des erfindungsgemäß eingesetzten Superabsorbers entspricht.

Zur Neutralisation können die üblichen Neutralisationsmittel verwendet werden, beispielsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden.

Natrium und Kalium als Alkalimetalle sind besonders bevorzugt, ganz besonders bevorzugt jedoch Natriumhydroxid, Natriumcarbonat oder Natriumhydrogencarbonat sowie deren Mischungen.

Die Neutralisation kann jedoch auch mit Ammoniak, Aminen oder Alkanolaminen, wie Ethanolamin, Diethanolamin oder Triethanolamin, vorgenommen werden. Die bevorzugten Neutralisationsmittel können auch im Gemisch mit weiteren Neutralisationsmitteln eingesetzt werden.

Die Vernetzer b) sind Monomere mit mindestens zwei polymerisierbaren Gruppen, die in das Polymernetzwerk radikalisch einpolymerisiert werden können. Geeignete Vernetzer b) weisen mindestens zwei funktionelle Reste ausgewählt unter Acrylamid-, Vinylether-, Allylether-,und Allylaminresten auf.

Bevorzugte Vernetzer sind N,N'-Methylenbisacrylamid und N,N'-Methylenbismethacrylamid, Allyl- und Vinylether von Di- und Polyolen, Triallylamin sowie dessen Derivate, Tetraallylalkylendiamin sowie dessen Derivate beispielsweise Tetrallylethylendiamin, mehrfach allylierte Amine, Allylether der Phosphorsäure sowie Vinylphosphonsäurederivate, wie sie beispielsweise in EP 343 427 A2 beschrieben sind.

Als Diallyl- und Divinylether von Di- und Polyolen sind beispielhaft genannt Butandioldiallylether bzw.- vinylether, Ethylenglykoldiallylether bzw. -vinylether, Pentaerythritoldi-, Pentaerythritoltri- und Pentaerythritoltetraallylether, Polyethylenglykoldiallylether, Glycerindi- und Glycerintriallylether, Polyallylether auf Basis Sorbitol, sowie ethoxylierte Varianten davon. Im erfindungsgemäßen Verfahren einsetzbar sind beispielsweise Divinyl- und Diallylether von Polyethylenglykolen, wobei das eingesetzte Polyethylenglykol 2 bis 15, bevorzugt 2 bis 6 Wiederholungseinheiten aufweist.

Besonders vorteilhafte Vernetzer (Monomere b) sind Diallylether und Divinylether des Polyethylenglykols mit 2 bis 15 Wiederholungseinheiten, sowie die Di- und Triallylether und Di- und Trivinylether des 2- bis 15-fach ethoxylierten Glycerins, des 2- bis 15-fach ethoxylierten Trimethylolpropans, des 2- bis 15-fach ethoxylierten Trimethylolethans, insbesondere des 2- bis 6-fach ethoxylierten Glycerins oder Trimethylolpropans.

Weiterhin vorteilhaft sind mehrfach allylierte Amine wie Tetraallylammonium-Halogenide.

Ganz besonders bevorzugte Vernetzer b) sind Tetraallylammoniumchlorid sowie Divinyl- und Diallylether von Polyethylenglykol mit 2 bis 15, bevorzugt 2 bis 6, Wiederholungseinheiten. Diese weisen eine hohe Hydrolysestabilität in Salzschmelzen auf und sind gut wasserlöslich, um ein homogenes Einpolymerisieren in den Superabsorber zu gewährleisten.

Der Anteil der Vernetzer b) beträgt mindestens 0,015 Mol-%, bevorzugt mindestens 0,02 Mol-%, und höchstens 0,1 Mol-% insbesondere höchstens 0,05 Mol-% bezogen auf die Gesamtmenge aller Monomere.

Von den Monomeren a) verschiedene monoethylenisch ungesättigte Monomere c) tragen keine Säuregruppen. Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Der Anteil der Monomeren c) beträgt bevorzugt höchstens 30 Mol-% insbesondere höchstens 10 Mol-% bezogen auf die Gesamtmenge aller Monomere. Besonders bevorzugt besteht der Superabsorber nur aus den Monomeren a) und b) in einpolymerisierter Form.

Die Polymerisation kann in Gegenwart üblicher Polymerisationsregler durchgeführt werden. Geeignete Polymerisationsregler sind beispielsweise Thioverbindungen, wie Thioglykolsäure, Mercaptoalkohole, z. B. 2-Mercaptoethanol, Mercaptopropanol und Mercaptobutanol, Dodecylmercaptan, Ameisensäure, Ammoniak und Amine, z. B. Ethanolamin, Diethanolamin, Triethanolamin, Triethylamin, Morpholin und Piperidin.

Die Monomere (a), (b) und gegebenenfalls (c) werden in 20 bis 80, vorzugsweise 20 bis 50, insbesondere 30 bis 45 Gew.-%iger wässriger Lösung in Gegenwart von Polymerisationsinitiatoren miteinander (co)polymerisiert. Als Polymerisationsinitiatoren können Photoinitiatoren sowie sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxinitiatoren. Derartige Polymerisaitonsinitiatoren sowie die bevorzugten Einsatzmengen sind allgemein bekannt und beispielsweise in der DE 10 2007 055 343 beschrieben, auf die ausdrücklich Bezug genommen wird.

Als Photoinitiator können zum Beispiel Benzoin- und Benzoinderivate, wie Benzoinether, Benzil und seine Derivate, wie Benzilketale, Acyldiazoniumsalze, Azoinitiatoren wie z.B. 2,2'-Azobis-(isobutyronitril), 2,2'-Azobis(2-amidinopropan)-hydrochlorid und/oder Acetophenonderivate verwendet werden.

Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Bevorzugt werden Redoxinitiatoren enthaltend eine oxidierende Komponente beispielsweise eine Perverbindung und eine reduzierende Komponente wie Ascorbinsäure. Bevorzugt wird ein Redoxinitiator bestehend aus Wasserstoffperoxid, Natriumperoxodisulfat und Ascorbinsäure eingesetzt. Beispielsweise werden diese Komponenten in den Konzentrationen 0,074 Mol-% Wasserstoffperoxid, 0,1 Mol-% Natriumperoxodisulfat und 5 · 10⁻³ Mol-% Ascorbinsäure bezogen auf die Monomere eingesetzt.

Die wässrige Monomerlösung kann den Initiator gelöst oder dispergiert enthalten. Die Initiatoren können dem Polymerisationsreaktor jedoch auch getrennt von der Monomerlösung zugeführt werden.

Superabsorber werden üblicherweise durch Polymerisation einer wässrigen Monomerlösung und wahlweise einer anschließenden Zerkleinerung des Hydrogels erhalten. Geeignete Herstellverfahren sind in der Literatur beschrieben. Superabsorber werden beispielsweise erhalten durch:
- Gelpolymerisation im Batchverfahren bzw. Rohrreaktor und anschließender Zerkleinerung im Fleischwolf, Extruder oder Kneter, wie beispielsweise in EP 445 619 A2 und DE 19 846 413 A1 beschrieben;
- Polymerisation im Kneter, wobei durch beispielsweise gegenläufige Rührwellen kontinuierlich zerkleinert wird, wie beispielsweise in WO 01/38 402 A1 beschrieben;
- Polymerisation auf dem Band und anschließende Zerkleinerung im Fleischwolf, Extruder oder Kneter wie beispielsweise in EP 955 086 A2, DE 38 25 366 A1 oder US 6 241 928 beschrieben und
- Emulsionspolymerisation, wobei bereits Perlpolymerisate relativ enger Gelgrößenverteilung anfallen, wie beispielsweise in EP 457 660 A1 beschrieben.

Bezüglich Details der Verfahrensdurchführung wird hiermit ausdrücklich auf die genannten Schriften verwiesen. Die Umsetzung wird vorzugsweise in einem Kneter oder auf einem Bandreaktor durchgeführt.

Die Säuregruppen der erhaltenen Hydrogele sind erfindungsgemäß zu 15 bis 85 Mol-% neutralisiert. Wie bereits oben beschrieben kann die Neutralisation nach der Polymerisation auf der Stufe des Hydrogels durchgeführt werden. Es ist aber auch möglich, die Neutralisation auf den gewünschten Neutralisationsgrad teilweise vor der Polymerisation durchzuführen. In bevorzugter Form wird die Monomerlösung vor Polymerisation durch Zugabe des Neutralisationsmittels auf den gewünschten Endneutralisationsgrad eingestellt.

Das neutralisierte Hydrogel wird getrocknet (großtechnisch z.B. mit einem Band- oder Walzentrockner) bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture Content" bestimmt wird. Der trockene Superabsorber enthält folglich bis zu 15 Gew.-% Feuchtigkeit, vorzugsweise höchstens 10 Gew.-%.

Anschließend wird der Superabsorber gemahlen beispielsweise mit Walzenstühle, Stiftmühlen, Hammermühlen, Schneidmühlen oder Schwingmühlen. Die Partikelgröße des gesiebten, trockenen Superabsorbers beträgt vorzugsweise unter 1000 µm, besonders bevorzugt unter 900 µm, ganz besonders bevorzugt unter 850 µm, und vorzugsweise über 0,1 µm, besonders bevorzugt über 0,5 µm, ganz besonders bevorzugt über 1 µm. Bevorzugt wird ein Superabsorber mit einer Partikelgröße von 250 µm bis 500 µm eingesetzt.

Die so hergestellten trockenen Superabsorber können anschließend oberflächennachvernetzt werden. Geeignete Nachvernetzungsmittel sind beispielsweise in der DE 102007055343 beschrieben, auf deren Offenbarung explizit verwiesen wird. Bevorzugt werden Superabsorber eingesetzt, deren Oberfläche nicht nachvernetzt wurde.

Unter Keimbildner, auch als Nucleierungsmittel oder Nucleationsmittel bezeichnet, sind Substanzen zu verstehen, die in Gegenwart des geschmolzenen Natriumsulfat Decahydrats Kristallisationskeime generieren oder als solche wirken (Römpp Chemie Lexikon, Thieme Verlag), die die Bildung einer größeren Anzahl kleinerer Kristalle begünstigen und den Kristallisationsprozess beschleunigen. Auf diese Weise lässt sich eine Unterkühlung der Schmelze verringern. Damit die Keimbildner in der wässrigen Schmelze als solche wirken, sind sie wasserunlöslich oder allenfalls schlecht wasserlöslich. Unter schlecht wasserlöslich wird verstanden, dass sich bei 20 °C unter Normaldruck weniger als 200 g, bevorzugt weniger als 100 g Keimbildner in einem Liter Wasser lösen. Als Keimbilder können unterschiedlichste Verbindungen wirken, z. B. Borax (Dinatriumtetraborat-Decahydrat), Titandioxid, Al₂O₃, ZnO, Zn(OH)₂, BaSO₄, SrSO₄, Kupfer-Pulver, Graphit, und Silicumdioxid. Bevorzugt wird Borax als Keimbildner eingesetzt.

Der Keimbildner wird erfindungsgemäß in einer Menge von 1 bis 10 Gew.-%, vorzugsweise von 3 bis 6 Gew.-% bezogen auf die Gesamtzusammensetzung eingesetzt.

Weiterhin ist es möglich die Temperatur des Phasenüberganges und damit die Temperatur bei der die Wärme gespeichert wird, zu senken, indem der Mischung ein oder mehrere Salze zugesetzt werden, die eine gute Löslichkeit in Wasser besitzen. Unter guter Löslichkeit wird verstanden, dass sich bei 20 °C unter Normaldruck mehr als 200 g, bevorzugt mehr als 300 g Salz bzw. Salzmischung pro Liter Wasser lösen. Das Salz wird in der Regel als Feststoff eingesetzt. Die Löslichkeit in Wasser ist lediglich das Auswahlkriterium, ob es erfindungsgemäß geeignet ist.

Bevorzugt wird das Salz ausgewählt unter Alkali-, Erdalkali-, Ammonium- und Cholinhalogenide, sowie -Alkali-, Erdalkali-, Ammonium- und Cholinacetaten. Beispielhaft seien Natriumchlorid, Kaliumchlorid, Ammoniumchlorid, Cholinchlorid, Magnesiumchlorid, Calciumchlorid, Strontiumchlorid, Bariumchlorid, Natriumbromid, Kaliumbromid, Ammoniumbromid, Cholinbromid, Magnesiumbromid, Calciumbromid, Strontiumbromid, Bariumbromid, Natriumacetat, Kaliumacetat, Ammoniumacetat, Cholinacetat, Magnesiumacetat und Calciumacetat genannt. Bevorzugt werden Natrium-, Kalium- und/oder Ammoniumchlorid.

Das wasserlösliche Salz wird erfindungsgemäß in einer Menge bis zu 20 Gew.-% eingesetzt, vorzugsweise von 5 bis 10 Gew.-% bezogen auf die wärmespeichernde Zusammensetzung. In der Regel bestimmt sich die Einsatzmenge durch die gewünschte Erniedrigung der Schmelztemperatur. So wählt man beispielsweise zur Absenkung der Schmelztemperatur der wärmespeichernden Zusammensetzung auf 23 °C 8 Gew.-% Kaliumchlorid. Zur Absenkung der Schmelztemperatur der wärmespeichernden Zusammensetzung auf 28 °C ist die Zugabe von 4 Gew.-% Cholinchlorid möglich. Unter Zugabe von 8 Gew.-% MgSO₄ wird eine Absenkung des Schmelzpunktes auf 30 °C beobachtet.

Weiterhin ist es möglich bis zu 30 Gew.-% bezogen auf die wärmespeichernde Zusammensetzung Wasser zuzusetzen. Der Zusatz solch kleiner Wassermengen hat keinen negativen Einfluss auf die Stabilität des Natriumsulfat Decahydrates. Der Zusatz führt lediglich zu einer geringfügigen Verringerung der Wärmekapazität der Zusammensetzung.

Die Herstellung der erfindungsgemäßen wärmespeichernden Zusammensetzung erfolgt bevorzugt, indem man die Zusammensetzungsbestandteile umfassend
- 60 - 98 Gew.-%: Natriumsulfat Decahydrat und
- 1 - 10 Gew.-%: eines oder mehrerer erfindungsgemäß geeigneter Superabsorber, wie oben beschrieben,
- 1- 10 Gew.-%: eines oder mehrerer Keimbildner und
- 0 - 20 Gew.-%: eines oder mehrerer wasserlöslicher Salze
zusammengibt, bevorzugt als Feststoff, und auf >32°C erwärmt. Gemäß dieser Ausführungsform ist wesentlich, dass Superabsorber als eine Komponente der Mischung eingesetzt wird. Bevorzugt besteht die Mischung ausschließlich aus Natriumsulfat Decahydrat, Superabsorber, und Keimbilder in der erfindungsgemäßen Zusammensetzung.

Bei der Herstellung der wärmespeichernden Zusammensetzung ist eine homogene Mischung aller Zusammensetzungsbestandteile vorteilhaft. Da die Zusammensetzungsbestandteile bei Raumtemperatur alle als Feststoff vorliegen, ist die Zugabereihenfolge beliebig. Eine homogene Verteilung der Mischungsbestandteile kann mit einem Rührer oder Kneter erzielt werden. Vorteilhaft ist, dass Superabsorber und Salzhydrat bereits als Mischung erwärmt werden.

Bevorzugt wird die Zusammensetzung auf eine Temperatur von 50 bis 70 °C erwärmt. Bereits ab einer Temperatur von 32 °C ist ein Erweichen zu beobachten. Es ist jedoch vorteilhaft auf eine Temperatur, die mindestens 20 °C über dem Schmelzpunkt von Natriumsulfat Decahydrat oder der schmelztemperaturerniedrigten Mischung liegt, zu erwärmen. Eine Temperatur oberhalb von 70 °C ist in der Regel nicht vorteilhaft, da sich Wasserdampf bildet. Bevorzugt wird auf eine Temperatur im Bereich von 55 bis 65 °C erwärmt. Es ist erfindungsgemäß vorteilhaft, während des Schmelzens zu rühren. Dies kann beispielsweise in einem Kneter geschehen. Anschließend lässt man die Mischung auf Raumtemperatur abkühlen.

Gemäß einer bevorzugten Variante umgibt man die erfindungsgemäße Zusammensetzung mit einer wasserdampfdichten Hülle. Das Material für eine solche Hülle kann sowohl flexibel wie auch starr sein. Eine starre Ausführungsform entspricht einem wasserdampfdichten Behälter oder Container. Unter wasserdampfdicht ist dabei zu verstehen, dass über einen Zeitraum von 30 Tagen bei einer Temperatur von 25 °C der Wassergehalt durch Verdampfen um weniger als 5 %, bevorzugt um weniger als 1 % absinkt. Geeignete Hüllmaterialien sind beispielsweise Polyethylen, Metalle wie Aluminium oder Laminate aus Polyethylen und Metallen. Das Hüllmaterial wird bevorzugt in Form einer Folie eingesetzt. Bevorzugt wählt man eine flexible Umhüllung vorzugsweise eine mehrzellige Laminatfolie wie sie in US 5 626 936 beschrieben wird, um bei Beschädigung der Folie ein Funktionieren des Materials in den verbleibenden, unbeschädigten Zellen weiter zu gewährleisten.

Die erfindungsgemäßen wärmespeichernden Zusammensetzungen lassen sich vorteilhaft als Latentwärmespeicher einsetzen. Derartig umhüllte erfindungsgemäße Zusammensetzungen können als wärmespeicherndes Baumaterial im Wohnungsbau, Industriebau, Kühlhausbau, in Sektionaltoren, in Bürocontainern oder im Automobil-, Wohnwagen- und Schiffsbau sowie in Leichtbauwänden eingesetzt werden. Damit kann sowohl ein übermäßiges Aufheizen, wie auch bei sinkenden Außentemperaturen ein Auskühlen verhindert werden.

Hierzu kann beispielsweise eine oben beschriebene Laminatfolie in Hohlräumen, wie man sie in Deckenverkleidungen, im Trockenbau, unter der Dachisolation oder hinter Wandpanelen findet, angebracht werden. Denkbar ist ferner eine Einarbeitung in Möbelstücke, z.B. das Anbringen an die Rückwände von Schränken oder unter Tischplatten.

Ferner können sie in den Wänden von Transportbehältern zum Kühlen oder sonstigen Wärmespeicherbehältern eingesetzt werden. Weiterhin eignet sich die wärmespeichernde Zusammensetzung für Wärmetanks. Hierunter ist ein großer Behälter zu verstehen, der mit der wärmespeichernden Zusammensetzung gefüllt ist und der einen Wärmetauscher besitzt, so dass man z.B. eine Wärmeträgerflüssigkeit, typischerweise Wasser, in ein zentrales Heizsystem umpumpen kann, um die Wärme aus dem Tank in die zu temperierenden Räume zu befördern oder umgekehrt überschüssige Wärme von den Räumen in den zentralen Wärmetank. Möglich ist ebenso eine mobile Anwendung, indem der Tank auf einem Lastkraftwagen montiert ist, so dass beispielsweise überschüssige Wärme von Kraftwerken zu beliebigen Einsatzorten transportiert werden kann und dort an ein oben beschriebenes Umpumpsystem abgegeben werden kann.

### Beispiele

### DSC-Messung:

Eine Probe wurde mittels differentieller Kalorimetrie-Analyse bezüglich des Schmelzpunktes und der Schmelzenthalpie untersucht. (DSC Q2000 von TA Instruments) Hierzu wurde eine Probe von 5 mg in ein abgeschlossenes Probenpfännchen gefüllt und mit 1 K/min auf 50 °C aufgeheizt, anschließend auf -30 °C abgekühlt und wieder auf 50 °C aufgeheizt. Die Schmelzenthalpie wurde beim zweiten Heizlauf aus der Fläche unter der Wärmestrom-Temperatur-Kurve entnommen.

### Herstellung des Superabsorber S1

DN = 50 % und DX = 0,033 %:

### Monomerlösung:

- 69,4 g: Acrylsäure (0,96 mol)
- 242,9 g: einer 37,3 gew.-%igen wässrigen Lösung von Natriumacrylat (0,96 mol)
- 0,35 g: einer 40 gew.-%igen wässrigen Lösung Tetraallylammoniumchlorid (0,65 mmol)
- 176,75 g: Wasser

### Initiatormischung:

- 2,22 g: einer 15 gew.-%igen wässrigen Lösung von Natriumperoxodisulfat (1,40 mmol)
- 5,33 g: einer 1,3 gew.-%igen wässrigen Lösung von Wasserstoffperoxid (2,04 mmol)
- 3,05 g: einer 0,5 gew.-%igen wässrigen Lösung von Ascorbinsäure (0,09 mmol)

### Allgemeine Durchführung

Die Monomerlösung wurde angesetzt und für 10 Minuten bei Raumtemperatur gerührt. Anschließend wurde sie im Eisbad auf 8 °C abgekühlt, in ein mit Teflon beschichtetes Dewar-Gefäß überführt und über einen Zeitraum von 30 Minuten Stickstoff durchgeleitet. Anschließend wurde die Initiatormischung zugesetzt und für eine Stunde reagieren lassen, wobei sich die Lösung durch die Reaktion auf ca. 60 °C aufheizt. Das erhaltene Gel wurde mechanisch zerkleinert und im Trockenschrank für 90 Minuten bei 150 °C getrocknet. Das erhaltene Granulat wurde in einer Mühle gemahlen und gesiebt. Es wurde die Siebfraktion 250 - 500 µm verwendet.

### Superabsorber S2 - S19

Analog zur Herstellung des Superabsorbers S1 wurden weitere Superabsorber hergestellt, die sich lediglich in ihrem Neutralisationsgrad (DN) und Vernetzungsgrad DX (Anteil der Monomere b) bezogen auf die Gesamtmenge aller Monomere) unterschieden und die der nachfolgenden Tabelle 1 zu entnehmen sind.

**Tabelle 1: Neutralisationsgrad (DN) und Vernetzungsgrad (DX) der hergestellten Superabsorber**

| Superabsorber | DN in mol-% | DX in mol-% | Herstellbarkeit |
|---|---|---|---|
| S2 | 0 | 0,17 | Mäßig |
| S3 | 0 | 0,83 | Gut |
| S4 | 15 | 0,033 | Mäßig |
| S5 | 25 | 0,025 | Gut |
| S6 | 25 | 0,033 | Gut |
| S7 | 40 | 0,025 | Gut |
| S8 | 40 | 0,033 | Gut |
| S9 | 50 | 0,0083 | Mäßig |
| S10 | 50 | 0,017 | Gut |
| S11 | 50 | 0,025 | Gut |
| S1 | 50 | 0,033 | Gut |
| S12 | 50 | 0,067 | Gut |
| S13 | 50 | 0,83 | gut |
| S14 | 60 | 0,033 | Gut |
| S15 | 75 | 0,0083 | Gut |
| S16 | 75 | 0,017 | Gut |
| S17 | 75 | 0,17 | Gut |
| S18 | 75 | 0,83 | Gut |
| S19 | 100 | 0,17 | Schlecht |

Die Herstellbarkeit bewertet wie gut der Superabsorber nach obigem Verfahren und damit auch großtechnisch herstellbar ist. Läuft die Reaktion innerhalb von 30 min vollständig ab und lässt sich das Gel gut zerkleinern und trocken, wird die Herstellbarkeit mit gut bewertet. Mäßig bedeutet, dass ein Kriterium knapp nicht erfüllt wird, bei schlecht werden mehrere Kriterien knapp bzw. eines sehr deutlich nicht erfüllt.

### Beispiel 1: Herstellung der wärmespeichernden Zusammensetzung

### Zusammensetzung

9,3 g Natriumsulfat Decahydrat
0,4 g Natriumtetraborat Decahydrat (Borax)
0,3 g Superabsorber S1

Die obigen Inhaltsstoffe wurden als Pulver gemischt und in einem Kunststoffbecher mit Deckel für eine Stunde auf 65 °C erhitzt. Das erhaltene Material wurde bis zum Erstarren abgekühlt und klein gemahlen.

### Beispiele 2-19

Analog zu Beispiel 1 wurden mit den Superabsorber S2 bis S19 weitere wärmespeichernden Zusammensetzungen hergestellt und mittels DSC deren Schmelzenthalpien bestimmt, die der Tabelle 2 zu entnehmen sind.

**Tabelle 2: Anwendungstechnische Eigenschaften der Beispielzusammensetzungen**

| Beispiel | Superabsorber | DN [%] | DX [%] | ΔHₘ (J/g) | Stabilität |
|---|---|---|---|---|---|
| 2 n.e. | S2 | 0 | 0,17 | - | Schlecht |
| 3 n.e. | S3 | 0 | 0,83 | - | Schlecht |
| 4 | S4 | 15 | 0,033 | 210 | Mäßig |
| 5 | S5 | 25 | 0,025 | 202 | Gut |
| 6 | S6 | 25 | 0,033 | 193 | Gut |
| 7 | S7 | 40 | 0,025 | 167 | Gut |
| 8 | S8 | 40 | 0,033 | 163 | Gut |
| 9 n.e. | S9 | 50 | 0,0083 | - | Schlecht |
| 10 | S10 | 50 | 0,017 | 191 | Gut |
| 11 | S11 | 50 | 0,025 | 167 | Gut |
| 1 | S1 | 50 | 0,033 | 179 | Gut |
| 12 | S12 | 50 | 0,067 | 150 | Gut |
| 13 n.e | S13 | 50 | 0,83 | 143 | Gut |
| 14 | S14 | 60 | 0,033 | 156 | Gut |
| 15 n.e. | S15 | 75 | 0,0083 | - | Schlecht |
| 16 | S16 | 75 | 0,017 | 161 | Gut |
| 17 n.e. | S17 | 75 | 0,17 | 138 | Gut |
| 18 n.e. | S18 | 75 | 0,83 | 132 | Gut |
| 19 n.e. | S19 | 100 | 0,17 | 147 | mäßig |

| | | | | | |
|---|---|---|---|---|---|
| n.e. nicht erfindungsgemäß | | | | | |

Je niedriger die Wärmekapazität ΔHₘ, desto schlechter die wärmespeichernde Zusammensetzung.

Die Stabilität bezeichnet die Homogenität der Mischung bei Lagerung über einen Zeitraum von 24 Stunden bei 60 °C in einem abgeschlossenen Gefäß. Trennen sich die Phasen deutlich auf, wird die Stabilität mit schlecht bewertet, wird eine leichte Abscheidung von Flüssigkeit beobachtet, wird sie mit mäßig bewertet, bei nicht erkennbarer Phasenseparation wird sie mit gut bewertet.

### Beispiel 20

Ein Superabsorber mit der für S1 beschriebenen Monomerzusammensetzung wurde analog zu obiger Beschreibung hergestellt mit dem Unterschied, dass 10 g der Monomermischung in Gegenwart von 330 g geschmolzenem Natriumsulfat Decahydrat polymerisiert wurden. Die Mischung zeigte keinen wärmespeichernden-Effekt, da sie inhomogen vorlag aufgrund der Phasenseparation des Natriumsulfat Decahydrats bevor der stabilisierende Effekt des sich bildenden Superabsorbers einsetzte.

### Beispiel 21: Schmelzpunktssenkung durch zugesetztes Salz

### Zusammensetzung

8,5 g Natriumsulfat Decahydrat
0,4 g Natriumtetraborat Decahydrat (Borax)
0,3 g Superabsorber S14
0,8 g Natriumchlorid

Die Inhaltsstoffe wurden analog Beispiel 1 verarbeitet.

### Beispiele 22-31

Analog zu Beispiel 21 wurden mit unterschiedlichen Salzen gemäß Tabelle 3 jeweils 10 g einer Zusammensetzung hergestellt, bestehend aus 3 Gew.-% Superabsorber S14, 4 Gew.-% Borax und x Gew.-% Salz jeweils bezogen auf die Gesamtzusammensetzung. Die Restmenge der Zusammensetzung ist Natriumsulfat Decahydrat.

**Tabelle 3: Erfindungsgemäße Mischungszusammensetzungen und deren Schmelzpunkte**

| Beispiel | Salz | x [Gew-%] | Schmelzpunkt in °C |
|---|---|---|---|
| 21 | NaCl | 4 | 28 |
| 22 | NaCl | 6 | 27 |
| 23 | NaCl | 8 | 22 |
| 24 | NaOAc | 8 | 30 |
| 25 | Cholinchlorid | 4 | 28 |
| 26 | Cholinchlorid | 8 | 26 |
| 27 | MgSO₄ | 8 | 30 |
| 28 | KCI | 2 | 29 |
| 29 | KCI | 4 | 27 |
| 30 | KCI | 6 | 25 |
| 31 | KCI | 8 | 24 |

### Beispiel 32

Die Zusammensetzung aus Beispiel 1 wurde einem Langzeitzyklentest unterzogen:

Ein 10 ml Ampullengläschen wurde randvoll mit der Zusammensetzung aus Beispiel 1 gefüllt, das Gläschen wurde anschließend luft- und wasserdicht verschlossen. Dann wurde es in das Wasserbad eines Kryostaten versenkt. Der Kryostat durchlief 1000 Mal folgendes Temperaturprogramm:
Heizen auf 50 °C innerhalb von 10 Minuten
Halten der Temperatur bei 50 °C für 10 Minuten
Abkühlen auf 10 °C innerhalb von 10 Minuten
Halten der Temperatur bei 10 °C für 30 Minuten

Nach 1000 Zyklen wurde eine Probe der Zusammensetzung einer DSC-Messung unterzogen. Es wurden ein Schmelzpunkt von 32,8 °C und eine Schmelzenthalpie von 203 J/g ermittelt.

Die U.S. Provisional Patent Application No. 61/538959, eingereicht am 26.09.2011, ist in die vorliegende Anmeldung durch Literaturhinweis eingefügt.

## Patentansprüche

1. Wärmespeichernde Zusammensetzung enthaltend
60 - 98 Gew.-% Natriumsulfat Decahydrat und
1 - 10 Gew.-% eines oder mehrerer Superabsorber
1- 10 Gew.-% eines oder mehrerer Keimbildner und
0 - 20 Gew.-% eines oder mehrerer wasserlöslicher Salze,
jeweils bezogen auf die wärmespeichernde Zusammensetzung, wobei der Superabsorber in einpolymerisierter Form enthält
a) mindestens 50 Mol-% bezogen auf den Superabsorber eines oder mehrerer monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt und
b) 0,015 bis 0,1 Mol-% bezogen auf die Gesamtmenge Monomere mindestens eines Vernetzers.

2. Wärmespeichernde Zusammensetzung nach Anspruch 1, **dadurch gekennzeichnet, dass** der Superabsorber in einpolymerisierter Form enthält
a) mindestens 50 Mol-% bezogen auf die Gesamtmenge aller Monomere monoethylenisch ungesättigte, Säuregruppen enthaltenden Monomere, wobei der Neutralisationsgrad der monoethylenisch ungesättigten, Säuregruppen enthaltenden Monomere 15 bis 85 Mol-% beträgt
b) 0,015 bis 0,1 Mol-% bezogen auf die Gesamtmenge aller Monomere mindestens eines Vernetzers und
c) gegebenenfalls ein oder mehrere ethylenisch und/oder allylisch ungesättigte Monomere, die von den Monomeren a) verschieden sind und mit ihnen copolymerisierbar sind.

3. Wärmespeichernde Zusammensetzung nach Anspruch 1 oder 2, **dadurch gekennzeichnet, dass** der Superabsorber einen Vernetzer in einpolymerisierter Form enthält, der mindestens zwei funktionelle Reste ausgewählt unter Acrylamid-, Vinylether-, Allylether- und Allylaminresten aufweist.

4. Wärmespeichernde Zusammensetzung nach einem der Ansprüche 1 bis 3, **dadurch gekennzeichnet, dass** der Superabsorber in einpolymerisierter Form einen Vernetzer enthält ausgewählt unter N,N'-Methylenbisacrylamid und N,N'-Methylenbismethacrylamid, Allyl- und Vinylethern von Di- und Polyolen, Triallylamin sowie dessen Derivaten, Tetraallylalkylendiamin sowie dessen Derivaten, mehrfach allylierten Aminen, Allylethern der Phosphorsäure sowie Vinylphosphonsäurederivaten.

5. Wärmespeichernde Zusammensetzung nach einem der Ansprüche 1 bis 4, **dadurch gekennzeichnet, dass** der Vernetzer ausgewählt ist unter Tetraallylammoniumchlorid sowie Divinyl- und Diallylether von Polyethylenglykol mit 2 bis 15 Wiederholungseinheiten.

6. Wärmespeichernde Zusammensetzung nach einem der Ansprüche 1 bis 5, **dadurch gekennzeichnet, dass** der Keimbildner ausgewählt wird unter Borax (Dinatriumtetraborat-Decahydrat), Titandioxid, Al₂O₃, ZnO, Zn(OH)₂, BaSO₄, SrSO₄, Kupfer-Pulver, Graphit, und Silicumdioxid.

7. Wärmespeichernde Zusammensetzung nach einem der Ansprüche 1 bis 6, **dadurch gekennzeichnet, dass** das wasserlösliche Salz ausgewählt wird unter Alkali-, Erdalkali-, Ammonium- und Cholinhalogeniden, sowie -Alkali-, Erdalkali-, Ammonium-, und Cholinacetaten.

8. Wärmespeichernde Zusammensetzung nach einem der Ansprüche 1 bis 7, erhältlich, indem man die Zusammensetzungsbestandteile umfassend
60 - 98 Gew.-% Natriumsulfat Decahydrat und
1 - 10 Gew.-% eines oder mehrerer Superabsorber gemäß Anspruch 1
1 - 10 Gew.-% eines oder mehrerer Keimbildner und
0 - 20 Gew.-% eines oder mehrerer wasserlöslicher Salze
zusammengibt und auf >32°C erwärmt.

9. Wärmespeichernde Zusammensetzung nach einem der Ansprüche 1 bis 8, erhältlich, indem man Superabsorber, Natriumsulfat Decahydrat und Keimbilder zusammengibt und auf eine Temperatur im Temperaturbereich von 50 bis 70°C erwärmt.

10. Wärmespeichernde Zusammensetzung nach einem der Ansprüche 1 bis 9, die von einer wasserdampfdichten Hülle umgeben ist.

11. Verfahren zur Herstellung einer wärmespeichernden Zusammensetzung gemäß den Ansprüche 1 bis 10, **dadurch gekennzeichnet, dass** man die Mischung gemäß Anspruch 1 aus den Einzelkomponenten herstellt und auf >32°C erwärmt.

12. Verwendung der wärmespeichernden Zusammensetzung gemäß den Ansprüchen 1 bis 10 als Latentwärmespeicher.

13. Verwendung der wärmespeichernden Zusammensetzung gemäß den Ansprüchen 1 bis 10 als Latentwärmespeicher in wärmespeichernden Baumaterialien.

14. Verwendung der wärmespeichernden Zusammensetzung gemäß den Ansprüchen 1 bis 10 als Wärmespeicherelement für Fahrzeuge, Wände von Transportbehältern oder sonstigen Wärmespeicherbehältern.
